# FASCICULE DE BREVET EUROPEEN

(11) **EP 1 893 469 B1**
(45) Date de publication et mention de la délivrance du brevet: **06.05.2009**
(21) Numéro de dépôt: 06764733.9
(22) Date de dépôt: 06.06.2006
(51) Int. Cl.: B62D 21/15, B62D 39/00

(54) **VOIE BASSE GUIDEE POUR AVANT DE VEHICULE AUTOMOBILE**
GEFÜHRTER UNTERBEREICH DER FRONT EINES AUTOMOBILS
GUIDED LOW AREA FOR THE FRONT OF A MOTOR VEHICLE

(30) Priorité: 20.06.2005 FR 0506222
(43) Date de publication de la demande: 05.03.2008
(73) Titulaire: ArcelorMittal Tubular Products Vitry, 51300 Vitry le François (FR)
(72) Inventeur: CHRETIEN, Jean-Michel, F-51250 Cheminon (FR); COCU, Amaud, F-59300 Valenciennes (FR); COLMONT, Jean-Louis, F-95800 Cergy Saint Christophe (FR); DERCHU, Thierry, F-55000 Bar le Duc (FR)
(74) Mandataire: Plaçais, Jean Yves
(86) Numéro de dépôt international: PCT/FR2006/001268
(87) Numéro de publication internationale: WO 2006/136671

(56) Documents cités:
- FR-A- 2 855 805
- US-A- 5 738 378
- US-B1- 6 298 936

## Description

L'invention concerne la partie avant d'un véhicule automobile. Elle vise plus particulièrement la zone inférieure de cette partie avant, appelée voie basse avant.

L'avant d'un véhicule automobile comporte un berceau (exactement "berceau avant"), qui supporte la suspension avant. Dans un mode de réalisation de la partie avant du véhicule, une première pièce allongée, ou prolonge, s'étend vers l'avant du véhicule, en direction générale horizontale (ou proche de l'horizontale), à partir du berceau avant, dans la zone inférieure dite voie basse avant Il s'y ajoute alors généralement une seconde pièce allongée, ou pendard, montée sensiblement verticalement (ou proche de la verticale) entre la prolonge et un élément de structure du véhicule. Plus précisément, ce dernier élément de structure peut être la partie avant du longeron avant, là où cette partie avant s'élève (vers l'avant) pour surmonter le berceau et la prolonge. Dans son ensemble, le longeron avant s'étend sur l'essentiel de la partie avant du véhicule. On comprendra que la prolonge et le berceau appartiennent à la voie basse avant du véhicule.

Un premier dispositifde liaison est agencé entre la première pièce et la seconde pièce. Celui-ci se résume en général à un assemblage fixe de la prolonge et du pendard, par exemple par boulonnage ou soudage.

La partie avant du véhicule joue un rôle essentiel en cas de choc, et en particulier de choc frontal. Elle doit être capable de participer convenablement à l'amortissement du choc, c'est-à-dire concourir, notamment par ses déformations, à l'absorption et à la dissipation de l'énergie engendrée par le choc.

Par exemple, la partie avant doit pouvoir amortir un choc de grande intensité sans provoquer de déformation de l'habitacle afin de garantir la sécurité des passagers. Pour autant, elle ne doit pas présenter une trop grande rigidité. En effet, dans le cas d'un choc de faible intensité, qui peut correspondre à une collision avec un piéton, elle doit pouvoir se déformer sans effort important, sans quoi de graves traumatismes pourraient être causés au piéton.

Ces contraintes et d'autres encore sont fixées par des normes qui régissent le domaine de la construction automobile. On comprend aisément qu'il est important de pouvoir prédire, et le cas échéant d'adapter, le comportement de la partie avant du véhicule lors de chocs d'intensités différentes. Dans un secteur aussi concurrentiel que le secteur automobile, il est également essentiel de proposer des configurations de partie avant aussi peu onéreuses que possible, tant en première monte qu'en cas de remise en état après accident.

De façon générale, on appelle ici section de voie avant la moitié de la voie avant située d'un côté du véhicule ; de même, on appelle section de voie basse avant la moitié de la voie basse avant située d'un côté du véhicule. Il existe en principe deux sections de voie (basse) avant, homologues l'une de l'autre.

Les voies basses connues n'ayant que partiellement donné satisfaction sur ces points, l'invention propose d'améliorer la situation.

A cet effet, l'invention part d'une section de voie basse avant pour véhicule automobile comprenant une première pièce allongée, du genre prolonge, dont l'extrémité arrière fait face à un élément de structure du véhicule du type berceau, tandis que son extrémité avant est reliée à un élément de structure du véhicule du type longeron par un premier dispositif de liaison. L'extrémité arrière de la première pièce allongée est montée mobile face à l'élément de structure du véhicule du type berceau. Ledit premier dispositif de liaison comprend une liaison de type glissière, autorisant un déplacement selon une direction générale sensiblement longitudinale, et un organe d'arrêt arrachable, agencé pour empêcher normalement ce déplacement, jusqu'à arrachement.

Dans un exemple, le premier dispositif de liaison comprend une seconde pièce allongée, du genre pendard, d'orientation sensiblement verticale, et la liaison de type glissière est prévue entre la première pièce et cette seconde pièce.

Il existe ainsi une possibilité de déplacement relatif entre la prolonge et la structure du véhicule, après arrachage de l'organe d'arrêt.

Comme on le verra plus en détail, les faibles efforts, insuffisants pour provoquer l'arrachage de l'organe d'arrêt, ne provoquent en général pas de dommage sur l'ensemble formé du pendard et de la prolonge. A l'arrachage de l'organe d'arrêt, le déplacement de la prolonge devient possible. Mais, au début du moins, le pendard ne se déforme pas, puisqu'il est désolidarisé de la prolonge. On épargne ainsi le pendard pour la majorité des chocs, réduisant par conséquent le nombre de pièces à remplacer après ledit choc.

D'autres caractéristiques et avantages de l'invention apparaîtront à l'examen de la description détaillée ci-après, ainsi que des dessins annexés sur lesquels :
- la figure 1 représente schématiquement l'avant d'un véhicule automobile vu de côté comprenant une voie basse de l'art antérieur,
- les figures 1A et 1B sont des schémas plus détaillés de deux variantes connues de réalisation de l'avant d'un véhicule automobile, vu de côté,
- la figure 2 représente schématiquement, en vue de côté, une voie avant d'un véhicule, munie d'une section de voie basse selon l'invention,
- la figure 2A est un autre schéma de la voie avant de la figure 2, plus détaillé de la même manière que les figures 1A et 1B,
- les figures 3 et 4 représentent schématiquement, partiellement et vu de côté l'avant d'un véhicule comprenant une section de voie basse selon l'invention dans un premier mode de réalisation, respectivement intacte et après un choc,
- la figure 5 est une vue détaillée de dessous en plan d'une section de voie avant, comprenant la section de voie basse de la figure 3,
- la figure 6 est une vue en coupe selon la ligne VI-VI de la section de voie basse de la figure 5,
- la figure 7 est une vue en coupe partielle de la section de voie basse de la figure 5 après un choc,
- la figure 8 est une vue en perspective de la section de voie basse de la figure 5,
- la figure 9 détaille une partie de la figure 8,
- la figure 10 représente en perspective une partie d'une section de voie basse selon l'invention dans un second mode de réalisation, et
- les figures 11 à 14 représentent schématiquement une section de voie avant d'un véhicule, munie d'une voie basse selon l'invention, en fonction de la vitesse associée aux chocs rencontrés.

Les dessins annexés pourront, non seulement servir à compléter l'invention, mais aussi contribuer à sa définition, le cas échéant.

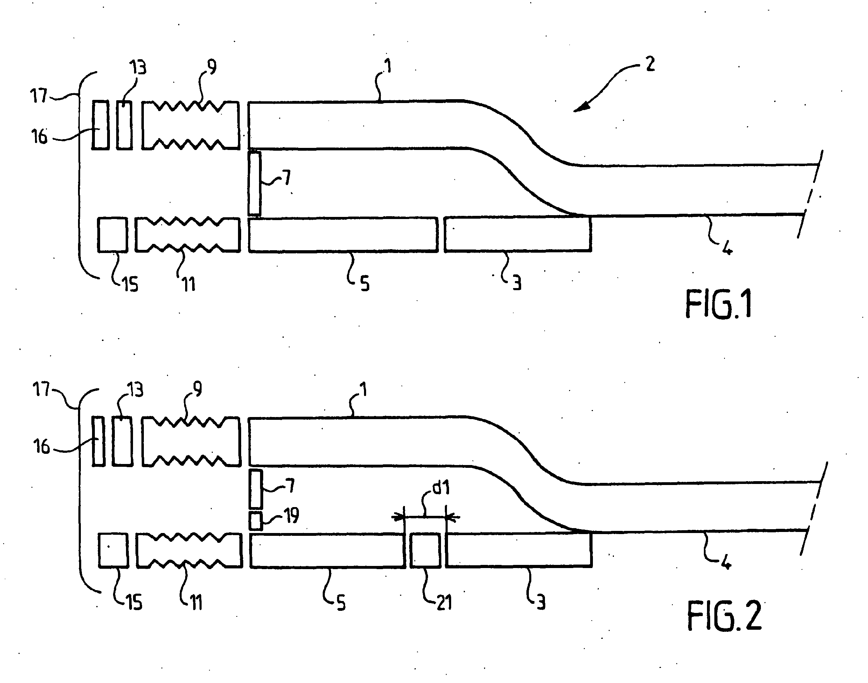

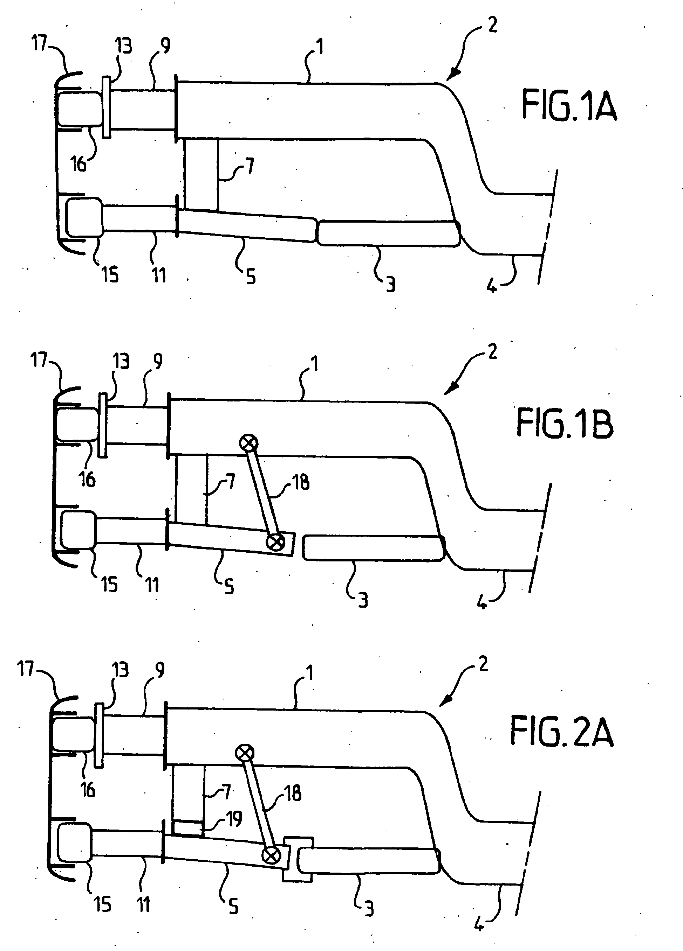

La figure 1 représente une partie avant, de type connu, pour véhicule automobile. Sur cette figure apparaît une section terminale 1 qui est la partie avant d'un élément de structure allongé 2 du véhicule, élément que l'on peut appeler longeron avant (ci-après dénommé plus brièvement "longeron"). Le longeron 2 surmonte un élément de structure 3 du véhicule, élément que l'on peut appeler berceau avant (ci-après dénommé plus brièvement "berceau"). Ce berceau 3 comprend généralement une plate-forme munie d'attaches (non représentées) destinées à supporter la suspension avant du véhicule, elle même liée par ailleurs au train avant.

La partie avant 1 du longeron 2 et le berceau 3 s'étendent généralement selon des plans parallèles entre eux. La partie avant 1 du longeron 2 dépasse en longueur du berceau 3. Le longeron 2 possède ici une partie arrière 4 qui s'étend parallèlement à la partie avant 1 du longeron 2, à une hauteur voisine de la hauteur du berceau 3, ici par valeurs supérieures. Le berceau 3 peut être fixé de manière rigide à la partie arrière 4 du longeron 2, par exemple par soudage, rivetage ou encore boulonnage. Dans ce cas, le berceau 3 peut être qualifié de "non filtré". Dans d'autres cas, le berceau 3 peut être lié à la partie arrière 4 du longeron 2 par l'intermédiaire d'un système souple filtrant les vibrations, tel qu'un "silent-bloc". On parle alors généralement de berceau "filtré".

Dans ces réalisations connues, une première pièce allongée du genre prolonge 5 s'étend sensiblement parallèlement à la partie avant 1 du longeron 2, depuis le berceau 3, sensiblement jusqu'à l'aplomb de la partie avant 1 du longeron 2. La prolonge 5 est par exemple réalisée sous forme d'un élément de poutre. Une seconde pièce allongée du genre pendard 7 relie verticalement la partie avant 1 du longeron 2 à la prolonge 5. Le pendard 7 est par exemple réalisé sous la forme d'un élément de poutre. La partie avant 1 du longeron 2 reçoit à une extrémité libre un organe d'absorption de choc, ou absorbeur 9. La prolonge 5 reçoit à une extrémité libre un absorbeur 11. Les absorbeurs 9 et 11 sont prévus pour se déformer, en général selon leur longueur, en dissipant une quantité d'énergie prévue, au moins approximativement.

La partie avant 1 du longeron 2 supporte un côté d'une traverse pare-choc médiane 13 par l'intermédiaire de l'absorbeur 9. La prolonge 5 supporte en partie une traverse pare-chocs inférieure 15 par l'intermédiaire de l'absorbeur 11. La traverse 15 est parfois appelée "traverse piéton" ou encore "poutre piéton". Les traverses 13 et 15 peuvent être réalisées sous forme de profilés cintrés dans la longueur. Comme le montrent les figurent 1A et 1B, la traverse 13 peut porter un ou plusieurs éléments supplémentaires 16, pour l'absorption de chocs "mous", donc en principe déformables. Ces absorbeurs peuvent prendre la forme d'une pièce profilée en mousse ou de plusieurs pièces parallélipipédiques en mousse ou matière plastique semi-molle. Les traverses 13 et 15 sont recouvertes d'une coque transverse, ou bouclier 17. Plus précisément, l' absorbeur mou 16 est reçu dans une cavité ménagée dans le bouclier 17, participant ainsi au support du bouclier 17. La traverse 15 s'insère dans une autre cavité également ménagée dans le bouclier 17. La traverse 15 ne participe pas nécessairement au support du bouclier 17, i.e. elle peut être logée dans la cavité avec jeu.

Dans le cas d'un véhicule connu à berceau non filtré (figure 1A), la prolonge 5 peut être fixée rigidement au berceau 3, par exemple par soudage, rivetage ou encore boulonnage. Au contraire, dans le cas d'un berceau filtré connu, la prolonge 5 n'est pas rigidement fixée au berceau 3. Dans l'exemple de berceau filtré connu selon la figure 1B, la prolonge 5 n'est pas liée au berceau 3. Elle est ici supportée par une barre métallique 18, du genre tirant, fixée à la partie avant 1 du longeron 2. D'autres systèmes de positionnement peuvent être prévus entre la prolonge 5 et le berceau 3, qui soient propres à éviter de transmettre des vibrations entre la prolonge 5 et le berceau 3.

L'avant de véhicule décrit ci-dessus comprend en outre, symétriquement, une seconde partie avant d'un second longeron (comme 1 et 2), une seconde prolonge (comme 5), de seconds absorbeurs (comme 9 et 11), et, en interconnexion entre les précédents, les traverses 13 et 15 recouvertes par le bouclier 17.

Selon l'art antérieur, le pendard 7 et la prolonge 5 sont classiquement assemblés fixement et rigidement l'un à l'autre. La prolonge 5 et le pendard 7 peuvent être rapportés et fixés par boulonnage ou soudage. L'absorbeur 9 est par exemple assemblé par clip sage ou collage sur la partie avant 1 du longeron 2 ; de même, l'absorbeur 11 est par exemple assemblé par clipsage ou collage sur la prolonge 5.

Lors d'un choc sur la partie avant, les efforts engendrés sont transmis à l'ensemble des pièces assemblées fixement les unes aux autres. Ainsi, les efforts engendrés par un choc se transmettent notamment au pendard 7 et à la prolonge 5. Dans le cas d'une structure à berceau non filtré (figure 1A), les efforts peuvent également se transmettre en même temps au berceau 3, via la prolonge 5.

L'ensemble comprenant les prolonges 5, la traverse 15, optionnellement les absorbeurs 11, ainsi que le berceau 3 est généralement appelé voie basse (avant). L'ensemble comprenant les longerons 1, la traverse 13, les absorbeurs 9 et l'élément déformable 16 est généralement appelé voie médiane (avant), remarque étant faite qu'il peut exister plus haut une "voie (avant) haute". Par ailleurs, comme déjà indiqué, le terme de "section" servira dans la suite à désigner l'un des côtés d'une voie considéré isolément.

On considère maintenant une section de voie basse selon l'invention, tout d'abord en référence au schéma de la figure 2.

Sur cette figure 2, un premier dispositif de liaison 19 est monté entre la prolonge 5 et le pendard 7. Le dispositif 19 est agencé de manière à autoriser un déplacement de la prolonge par rapport au pendard 7. Ici, ce déplacement est essentiellement longitudinal, le mot "longitudinal" visant ici l'axe parcourant le véhicule selon sa longueur.

L'invention convient particulièrement à une structure à berceau filtré. Toutefois, elle peut également s'appliquer à une structure à berceau non filtré, pourvu que soit alors prévus, à la place de la liaison rigide entre la prolonge 5 et le berceau 3, une possibilité de déplacement longitudinal. Éventuellement, un tirant 18 peut alors être mis en place (voir figure 2A).

Sur la figure 2, la partie de la prolonge 5 qui se situe en arrière du pendard peut être réalisée plus courte que dans le cas de la prolonge 5 classique de la figure 1. A noter que la prolonge 5 de la figure 2 n'est pas solidaire du berceau 3 : une distance d1 sépare le berceau 3 de l'extrémité proximale de la prolonge 5. La prolonge 5 peut ainsi être amenée à se déplacer par rapport au pendard 7 (et/ou à la partie avant 1 du longeron 2), jusqu'à venir en butée contre le berceau 3.

Ce déplacement est ici principalement une translation. Le déplacement peut être aussi une translation composée avec une rotation autour d'un axe en principe non parallèle à la grande dimension de la prolonge. Autrement dit, en plus du mouvement de translation évoqué ci-dessus, il peut être prévu une rotation de la prolonge 5 par rapport au pendard 7. En variante, un guidage plus complexe comportant une liaison pivot n'est pas exclu.

Sur la figure 2, la section de voie basse comprend en outre un second dispositif de liaison 21, monté entre le berceau 3 et la prolonge 5. Le dispositif 21 peut comprendre des moyens de guidage, assimilables à une came, propres à guider le déplacement de la prolonge 5 par rapport au berceau 3.

De préférence, le premier dispositif 19 comprend une liaison de type glissière assortie d'un organe d'arrêt arrachable. (Le mot glissière est utilisé ici pour désigner tout guidage en déplacement, non nécessairement rectiligne, à la manière d'une came, à contact permanent ou non). L'organe d'arrêt arrachable est, compte tenu de son montage, calibré pour céder, ou rompre, sous un effort prédéterminé, aux tolérances près. Le déplacement de la prolonge 5 ne peut s'effectuer qu'à partir d'un effort appliqué (en principe longitudinal) égal ou supérieur à l'effort de rupture de l'organe d'arrêt. Pour des efforts inférieurs, ledit déplacement est empêché.

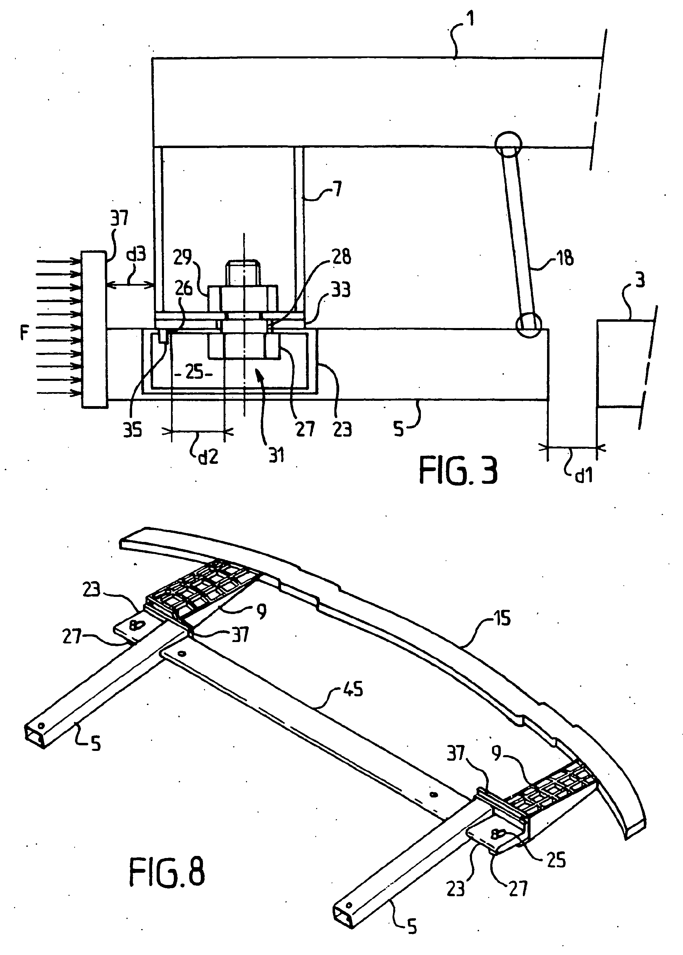

Un premier mode de réalisation de l'invention est illustré schématiquement sur la figure 3. Ici, la section de voie basse comprend en outre une pièce intermédiaire 23 solidaire de la prolonge 5. Une rainure 25 ménagée dans cette pièce 23 s'étend suivant la direction longitudinale de la prolonge 5 et s'ouvre vers l'extérieur par un trou oblong 26. La rainure 25 loge la tête d'une vis ou tourillon 27 présentant un épaulement 28, et dont le corps dépasse extérieurement de la rainure 25 par le trou 26. La vis 27 est capable de se mouvoir dans la rainure 25 sans en sortir. Un écrou 29, ici solidaire du pendard 7, reçoit la vis 27 en sorte que la prolonge 5 est fixée au pendard 7 par l'intermédiaire de la pièce 23. La rainure 25, la vis 27 et l'écrou 29 coopèrent ainsi pour former une liaison glissière 31 entre la pièce 23 et le pendard 7. La liaison 31 autorise un déplacement suivant la direction longitudinale du véhicule, conformément à la coopération entre l'épaulement 28 de la vis 27 et le trou oblong 26, formant came. Dans l'exemple de la figure 3, la pièce 23 est disposée à l'aplomb du pendard 7. Le pendard 7 présente une section au moins partiellement creuse logeant l'écrou 29. L'écrou 29 peut être fixé par soudage.

Dans ce mode de réalisation, une plaquette 33 présente un téton 35 logé dans un trou ménagé dans la pièce 23. La plaquette 33 est traversée par la vis 27 au niveau de l'épaulement 28. Par exemple, la plaquette 33 est disposée à une extrémité du pendard 7, entre le pendard 7 et la pièce 23. Il faut ici observer que le jeu illustré entre l'épaulement 28 et le trou oblong 26 est exagéré, pour la clarté du dessin. En pratique, il s'agit d'un jeu minime, limité aux besoins de montage. Il en est de même pour le jeu entre la plaquette 33 et l'épaulement 28.

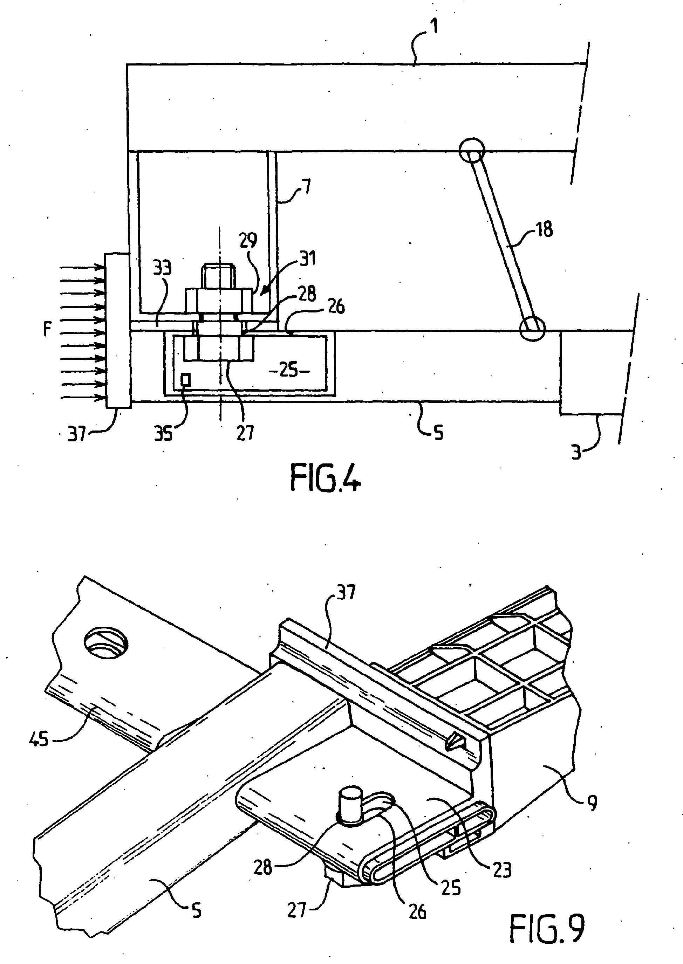

Lorsqu'un effort longitudinal F est appliqué à la prolonge 5, alors que la plaquette 33 est en appui contre l'épaulement 28 de la vis 27, cet effort F est reporté au niveau du téton 35. Lorsque l'effort F atteint ou dépasse la limite de rupture en cisaillement du téton 35, celui-ci cède, comme représenté sur la figure 4. Le déplacement entre le pendard et la prolonge 5 est alors autorisé.

La course permise à la vis 27 est supérieure à la distance d1, de sorte que le déplacement peut se poursuivre jusqu'à ce que la prolonge 5 vienne en butée contre le berceau 3. Ladite course correspond dans ce mode de réalisation à la distance d2 séparant, au repos, l'épaulement de la vis 27 de l'extrémité du trou oblong 26. Autrement dit, la distance d2 est supérieure à d1.

Dans l'exemple de la figure 3, la prolonge 5 supporte à une extrémité une platine 37 disposée perpendiculairement et sur laquelle peut être fixé l'absorbeur 11 précité. La distance d3 séparant la platine 37 de la prolonge 5 doit également être supérieure à la distance d2 pour permettre la venue en butée de la prolonge 5 sur le berceau 3. Autrement dit, la distance d3 doit être supérieure à la distance d1.

L'effort F est représenté sur les figures 3 et 4 comme s'appliquant sur la platine 37, comme cela est le cas lors d'un choc frontal en direction longitudinale. Pour des chocs frontaux obliques, le comportement est le même avec la composante longitudinale des efforts rencontrés.

Le tirant 18 comporte deux liaisons, d'une part avec la partie avant 1 du longeron 2, d'autre part avec la prolonge 5. Ces deux liaisons sont agencées d'une manière compatible avec le mouvement souhaité de déplacement de la prolonge 5 par rapport au berceau 3, par conséquent par rapport à la partie avant 1 du longeron 2. A cet effet, on peut utiliser des liaisons de type articulation mécanique et/ou articulation par déformation. Des liaisons différentes peuvent être prévues pourvu que celles-ci autorisent le déplacement de la prolonge 5.

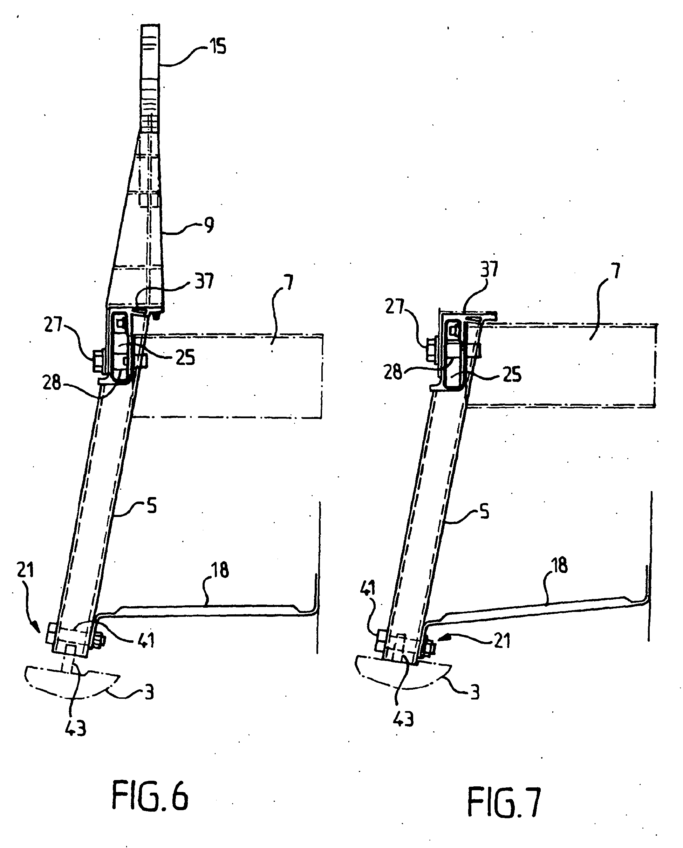

Le tirant 18 est ici disposé légèrement oblique. Le tirant 18 sert à suspendre la prolonge 5 sans entraver le déplacement évoqué plus haut entre la prolonge 5 et le pendard 7. Ici, la cinématique indique que le déplacement de la prolonge va comporter un léger pivotement vers le haut, côté berceau, jusqu'à ce que la prolonge rencontre la butée (comparer la figure 6 à la figure 7 où la prolonge est en butée).

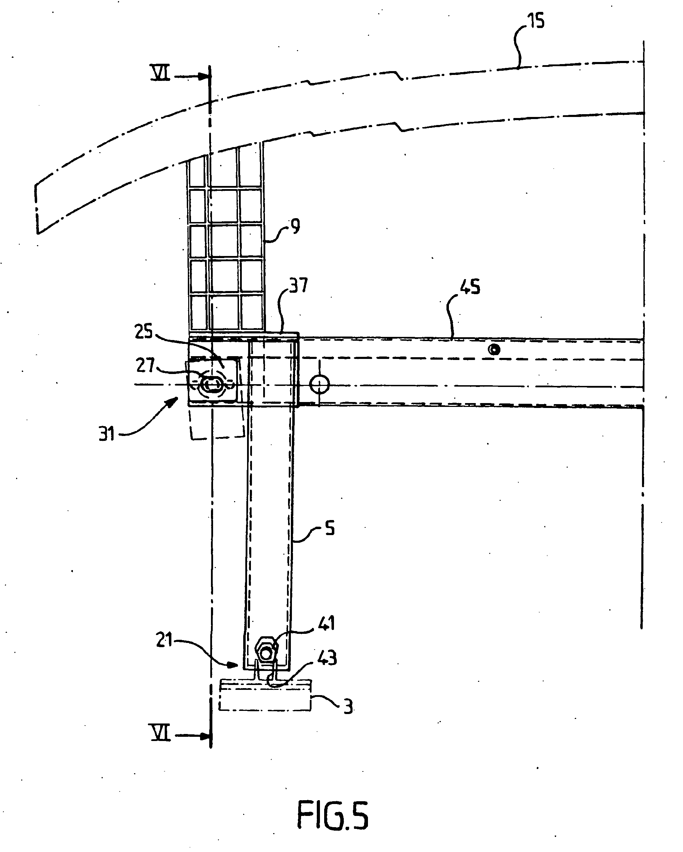

Les figures 5, 6 et 7 montrent de manière plus détaillée une voie basse selon l'invention dans le premier mode de réalisation. Les prolonges 5 sont réalisées sous forme de profilés de section en principe formée supportant à l'une de leurs extrémités une platine 37 sur laquelle est fixé un absorbeur 9. L'absorbeur 9 se présente par exemple sous la forme d'une structure alvéolaire métallique garnie de mousse. La traverse piéton 15 peut être réalisée sous la forme d'un profilé cintré.

La traverse piéton 15 peut être une poutre tubulaire, par exemple du type décrit dans la demande de brevet français numéro 05 03090 déposée par la Demanderesse le 30 mars 2005.

La prolonge 5 peut être du type dit "à déformation programmée", c'est-à-dire dont la loi de déformation sous l'effet d'un effort de compression et de couples d'axe perpendiculaire à un plan passant par cet axe est déterminée. Plus particulièrement, cette loi pourra comprendre une phase d'absorption d'énergie suivie d'un effacement de la prolonge comme décrit dans la demande de brevet français FR-A-2855805. Ce document a été pris comme base du préambule de la revendication indépendante 1. L'utilisation d'une telle prolonge 5 permet d'une part de mieux prévoir la quantité d'énergie pouvant être dissipée par ladite prolonge. Elle permet en outre de connaître la géométrie de la prolonge une fois l'énergie dissipée.

Dans le mode de réalisation décrit, le dispositif 21 est réalisé sous la forme d'une liaison linéaire annulaire comprenant un axe 41 disposé transversalement à la prolonge 5 et capable de s'engager dans une pièce à alvéole allongé 43 (longitudinal) solidaire du berceau 3 lors du déplacement de la prolonge 5. D'autres solutions permettant d'assurer la fonction de guidage sont envisageables. En particulier, il est possible de prévoir un "doigt" sous la forme d'un axe dépassant la prolonge 5 dans la longueur et s'engageant dans un alésage de diamètre adapté prévu dans le berceau 3.

Comme le montrent les figures 8 et 9, la pièce intermédiaire 23 peut être logée sans possibilité de déplacement longitudinal dans un trou ménagé transversalement dans la prolonge 5. Par exemple, la pièce 23 est une pièce d'enveloppe de révolution de section aplatie s'emmanchant dans un trou oblong conformé selon ladite section.

Une traverse 45 qui relie les prolonges 5 peut par exemple participer au support d'un radiateur du véhicule. Ici, la traverse 45 est réalisée sous la forme d'un profilé de section aplatie qui s'engage à chacune de ses extrémités dans les pièces 23. Dans l'exemple des figures 8 et 9, la pièce 23 et la platine 37 sont réalisées d'un seul tenant. Le trou logeant la pièce 23 est alors réalisé débouchant vers l'extrémité de la prolonge 5 de manière à permettre le montage de l'ensemble formé de la pièce 23 et de la platine 37.

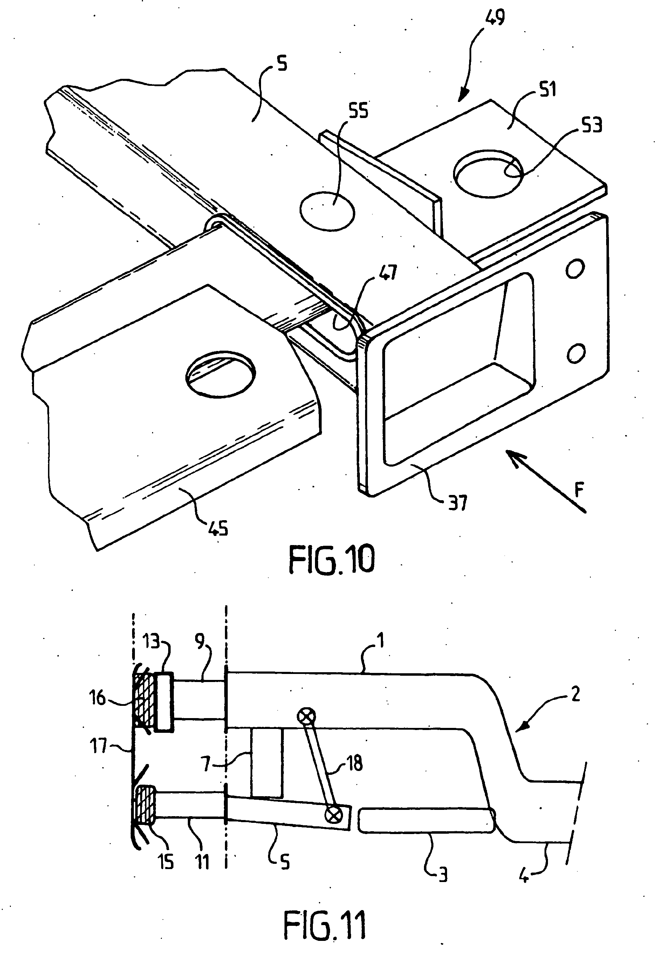

Un second mode de réalisation de l'invention est illustré sur la figure 10. La prolonge 5 est percée d'une rainure longitudinale 47. La rainure 47 se présente sous la forme d'un trou oblong débouchant ménagé sur un côté de la prolonge 5.

La traverse 45 s'engage dans la rainure 47. La forme de la rainure 47 est adaptée de manière à permettre un déplacement longitudinal de la traverse 45 par rapport à la prolonge 5. Une pièce intermédiaire 49 est apte à s'emmancher sur la section d'extrémité de la traverse 45 dépassant de la prolonge 5. La pièce 49 supporte une platine de fixation 51 pour le pendard 7. La platine 51 est par exemple disposée à l'aplomb du pendard 7. La platine 51 est par exemple percée d'un trou 53 pour le passage d'une vis épaulée (non représentée) pouvant être vissée dans l'écrou 29.

L'organe d'arrêt arrachable est ici une goupille 55, qui maintient normalement la prolonge 5 et la traverse 45 solidaires. Par exemple, la goupille 55 traverse verticalement la prolonge 5 et pénètre dans la traverse 45 par un trou non représenté. La goupille 55 se présente par exemple sous la forme d'une tige cylindrique de section circulaire. Sous l'effet d'un effort longitudinal F supérieur à la résistance en cisaillement de la goupille 55, celle-ci se rompt et autorise alors le déplacement relatif de la traverse 45 dans la rainure 47. Par conséquent, le déplacement de la prolonge 5 par rapport au pendard 7 est de même autorisé.

Le comportement d'une voie basse selon l'invention lors de différents chocs va maintenant être décrit à l'aide des figures 11 à 14. Sur ces figures, les pièces déformées lors d'un choc particulier sont représentées avec des hachures croisées. Les pièces non déformées ne sont pas hachurées. Les pièces qui se déplacent sont représentées à l'aide de hachures parallèles.

La description ci-après de ces figures correspond à l'exemple particulier d'un véhicule de masse environ 1300 kg, tout du moins en ce qui concerne les valeurs d'effort indiquées.

La figure 11 illustre tout d'abord le cas d'un choc frontal à très faible vitesse, dit "choc piéton". La limite de vitesse est d'environ V1 = 4 km/h. A la vitesse V1, on a un effort longitudinal F atteignant sensiblement une première valeur seuil F1. On a, dans l'exemple, F1 = 700 daN à 4 km/h. Le calibrage de l'organe d'arrêt arrachable (téton 35 ou goupille 55) correspond à F1. Plus précisément, la goupille 55 (ou le téton 35) est dimensionnée de manière à présenter une résistance au cisaillement d'environ F1.

Tant que l'on a F <= F1, la traverse 15 se déforme plastiquement. L'élément 16 porté par la traverse 13 se déforme également plastiquement. Compte tenu de la faible quantité d'énergie mise en jeu dans un tel choc, les déformations plastiques de la traverse 15 et de l'élément 16 suffisent à dissiper ladite énergie, i.e. à amortir le choc. La traverse 15 et l'élément 16 doivent être changés eux aussi lors de la réparation du véhicule.

Comme le montre la figure 11, l'écrasement de l'élément 16 et de la traverse 15 provoque une expansion de ces éléments en hauteur et en largeur. Cette expansion conduit à la destruction des cavités du bouclier 17 logeant ces éléments. Le bouclier 17 doit donc être également changé. Pour de très faibles valeurs de l'effort F, la traverse 15 et l'élément 16 peuvent se déformer élastiquement sans nécessité de les échanger.

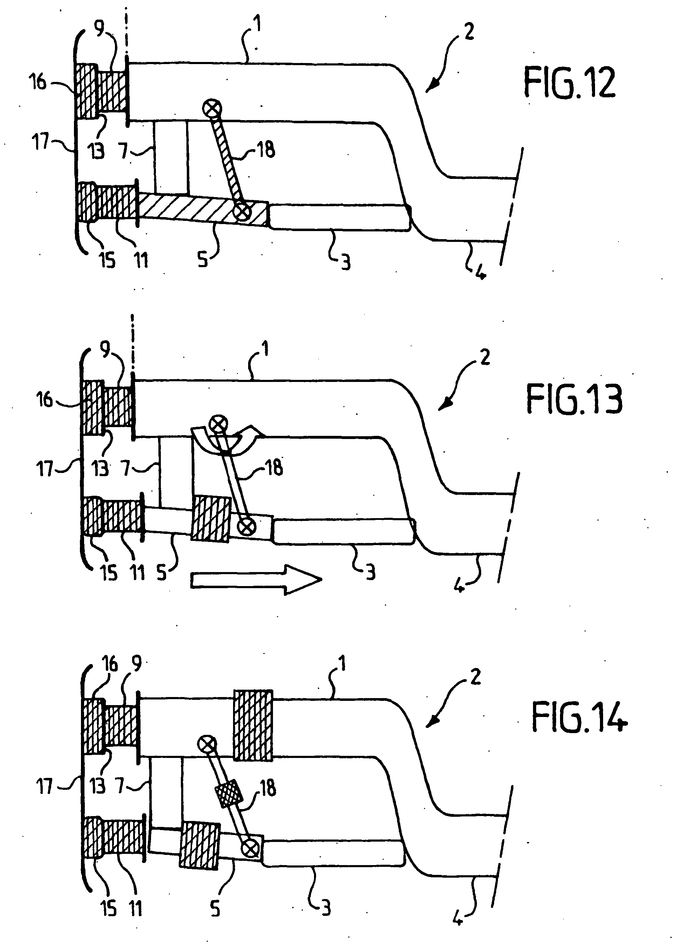

La figure 12 illustre un choc à faible vitesse, c'est-à-dire sensiblement comprise entre V1 et V2, avec V2 égale à environ 16 km/h. Dans ce cas, l'effort F atteint des valeurs supérieures à F1 et inférieures à une seconde valeur seuil F2. On a, dans l'exemple, F2 = 3000 daN à 16 km/h.

Comme précédemment, la traverse inférieure 15 et l'élément 16 se déforment plastiquement dissipant une quantité prévue d'énergie. Le téton 35 (ou la goupille 55) se rompt par cisaillement à une valeur de F voisine de F1. Libérée, la prolonge 5 se déplace alors par rapport au pendard 7 (immobile ici), et vient en appui contre le berceau 3, le tirant 18 guidant ce déplacement. Comme l'effort F augmente, il se produit maintenant une compression des absorbeurs 9 et 11 ainsi que de la traverse 13. A noter que, dès que la prolonge 5 est en appui contre le berceau 3, la voie basse avant devient plus rigide longitudinalement.

La prolonge 5 a été déplacée jusqu'à venir en appui contre le berceau 3 mais n'a pas été déformée. Le pendard 7 est intact. La traverse 15, la traverse 13, l'élément 16, le téton 35 (ou la goupille 55), et les absorbeurs 9 et 11 sont endommagés et doivent être remplacés. La prolonge 5 est remise en place.

Les figures 13 et 14 illustrent un choc à grande vitesse, c'est-à-dire sensiblement comprise entre V2 et V3 égale à environ 64 km/h. Dans ce cas, l'effort F atteint des valeurs supérieures à F2 et inférieures à une valeur seuil F3. On a, dans l'exemple, F3 = 7000 daN à 64 km/h.

L'amortissement du choc débute comme indiqué dans le cas précédent. Les absorbeurs 9 et 11 sont totalement comprimés. Sous l'effet de l'effort F, la prolonge 5 en appui contre le berceau 3 peut subir une déformation plastique dissipant encore de l'énergie du choc (figure 13).

La quantité d'énergie dissipée par la prolonge 5 est connue lorsque la prolonge 5 est du type "à déformation programmée". Dans ce cas, la longueur de la prolonge 5 déformée est également connue. D'autres types de prolonge 5 peuvent botteler.

Si toute l'énergie du choc n'a pas été dissipée, il se produit en plus une déformation plastique de la partie avant 1 du longeron 2 (figure 14), puis éventuellement d'un longeron supérieur (voie supérieure, non représentée) lorsque celui-ci existe sur le véhicule. Une déformation plastique du pendard 7 peut également avoir lieu. Au delà, le berceau 3 peut être déformé. La déformation du berceau 3 intervient le plus tard possible, afin de préserver les passagers.

La description ci-dessus vise le cas d'un choc frontal de direction longitudinale et horizontale. Des chocs réels pourront être obliques par rapport à la direction longitudinale du véhicule, et/ou par rapport à l'horizontale. Les composantes transverses qui en résultent peuvent modifier l'ordre de déroulement des déformations des pièces, tel qu'exposé ci-dessus.

D'autres modes de réalisation peuvent être envisagés. En particulier tout moyen permettant de réaliser une liaison glissière entre la prolonge 5 et le pendard 7 pourra être considéré. La rainure 25 pourrait être ménagée directement dans la prolonge 5. De même, tout moyen permettant de bloquer ladite liaison en deçà d'un effort seuil pourra être appliqué. Ci-dessus, la limite de résistance de l'organe d'arrêt a été définie mécaniquement ; elle pourrait être au moins partiellement commandée, à l'aide de capteurs appropriés convenablement positionnés, l'organe d'arrêt arrachable pouvant alors comporter un boulon relâchable sur commande, et/ou un organe éclipsable par électro-aimant.

En résumé, la description détaillée ci-dessus vise une section de voie basse destinée à être montée à l'avant d'un véhicule automobile, présentant un berceau surmonté de longerons. Ladite section comprend au moins un premier élément mécanique de forme allongée, au moins un second élément mécanique de forme allongée propre à être fixé sensiblement perpendiculairement à l'un des longerons, et au moins un premier dispositif de liaison, agencé entre le premier élément et le second élément et propre à maintenir le premier élément dans le prolongement du berceau, à une distance déterminée de celui-ci, lorsque le second élément est fixé. Le premier dispositif de liaison comprend des moyens de liaison de type glissière autorisant un déplacement entre les premier et second éléments selon une direction sensiblement longitudinale du premier élément, et un organe d'arrêt coopérant avec lesdits moyens de liaison pour empêcher ledit déplacement. Cet organe d'arrêt coopère avec les moyens de liaison pour libérer ledit déplacement lorsqu'un effort longitudinal supérieur à une première valeur seuil est appliqué au premier élément, de sorte que le premier élément peut se mouvoir jusqu'à venir en appui contre le berceau sous l'effet d'un tel effort.

La liaison 21 et le tirant 18 peuvent être prévus conjointement ou indépendamment l'un de l'autre sur la voie basse selon l'invention. D'autres moyens permettant d'assurer le support de la prolonge 5 et son guidage peuvent être prévus. La traverse 45 est également optionnelle.

On a décrit deux modes de réalisation, dans lesquels, côté avant, la prolonge se déplace avec la traverse par rapport au pendard (Figure 8 notamment), ou bien la prolonge se déplace par rapport au pendard à la traverse (Figure 10). Il est également envisageable que l'ensemble formé par la prolonge, la traverse et le pendard (ou une partie de celui-ci) se déplace par rapport à la partie avant 1 du longeron 2, l'organe d'arrêt arrachable étant placé pour agir au niveau de ce déplacement.

Sur d'autres plans, il est généralement possible d'intervertir les positions des éléments de came, et, le cas échéant, de l'organe d'arrêt arrachable.

L'invention s'applique tout particulièrement à un véhicule doté d'un berceau dit "court", c'est-à-dire d'un véhicule dans lequel une prolonge peut être mise en place. Les véhicules dits à berceau "long" n'ont pas suffisamment d'espace en face avant pour loger une prolonge 5. A noter cependant que l'expression berceau "long" est parfois utilisée pour désigner l'ensemble berceau + prolonge, auquel cas l'invention conserve son intérêt.

La description utilise des termes du métier, qui peuvent varier d'un pays à l'autre ou d'un constructeur automobile à l'autre, par exemple. Ainsi :
- le pendard peut être également désigné pendeloque,
- le mot "brancard" désigne parfois la partie avant du longeron, voire une partie plus étendue de ce même longeron,
- les traverses sont parfois dites poutres,
- la prolonge peut aussi s'appeler allonge, ou encore "Add-on".

L'invention couvre une voie basse complète déjà montée sur un véhicule automobile. Elle couvre également un kit comprenant tout ou partie des pièces décrites ci-dessus, sous forme de pièces détachées, mais aussi sous forme d'assemblage prêt à être monté sur le véhicule.

L'invention ne se limite pas aux modes de réalisation décrits ci-dessus, à titre d'exemple, mais englobe toutes les variantes que pourra envisager l'homme de l'art.

## Revendications

1. Section de voie basse avant pour véhicule automobile comprenant une première pièce allongée (5), du genre prolonge, dont l'extrémité arrière fait face à un élément de structure (3) du véhicule du type berceau, tandis que son extrémité avant est reliée à un élément de structure (1) du véhicule du type longeron par un premier dispositif de liaison (19),
**caractérisée en ce que,** extrémité arrière de la première pièce allongée (5) étant montée mobile face à l'élément de structure (3) du véhicule du type berceau, ledit premier dispositif de liaison (19) comprend une liaison de type glissière (31), autorisant un déplacement selon une direction sensiblement longitudinale, et un organe d'arrêt arrachable (35, 55), agencé pour empêcher normalement ledit déplacement, jusqu'à arrachement.

2. Section de voie basse avant selon la revendication 1, **caractérisée en ce que** ledit premier dispositif de liaison (19) comprend une seconde pièce allongée (7), du genre pendard, d'orientation sensiblement verticale, et **en ce que** la liaison de type glissière (31) est prévue entre la première pièce (5) et la seconde pièce (7).

3. Section de voie basse avant selon la revendication 1, **caractérisée en ce qu'**elle comprend en outre un second dispositif de liaison (21) entre l'arrière de la première pièce (5) et l'élément de structure du véhicule du type berceau (3), ce second dispositif de liaison (21) comprenant des moyens de guidage de la première pièce.

4. Section de voie basse avant selon la revendication 3, **caractérisée en ce que** les moyens de guidage comprennent une liaison de type linéaire-annulaire (41, 43).

5. Section de voie basse avant selon la revendication 4, **caractérisée en ce que** la liaison de type linéaire-annulaire comprend un alvéole allongé longitudinal (43) propre à loger un téton (41).

6. Section de voie basse avant selon l'une des revendications précédentes, **caractérisée en ce que** la première pièce (5) supporte un organe d'absorption de chocs (11).

7. Section de voie basse avant selon l'une des revendications précédentes, **caractérisée en ce que** la première pièce (5) supporte au moins en partie une poutre transverse (15).

8. Section de voie basse avant selon les revendications 5 et 6, prises en combinaison, **caractérisée en ce que** les dispositifs d'absorption de chocs (11) sont disposés entre la poutre (15) et la première pièce (5).

9. Section de voie basse avant selon l'une des revendications précédentes, **caractérisée en ce que** la première pièce (5) présente une section propre à se déformer longitudinalement de manière prévisible.

10. Section de voie basse avant selon la revendication 9, **caractérisée en ce que** ladite section est susceptible de botteler.

11. Section de voie basse avant selon l'une des revendications précédentes, **caractérisée en ce que** la liaison de type glissière (31) comprend une rainure longitudinale (25) solidaire de la première pièce (5) et un tourillon (27) solidaire de la seconde pièce.

12. Section de voie basse avant selon la revendication 11, **caractérisée en ce que** l'organe d'arrêt comprend un téton (35) logé dans la première pièce (5) et solidaire de la seconde pièce (7).

13. Section de voie basse avant selon la revendication 11, **caractérisée en ce que** le téton (35) est sensiblement calibré en résistance au cisaillement.

14. Section de voie basse avant selon l'une des revendications précédentes, **caractérisée en ce que** la liaison de type glissière (31) comprend une rainure longitudinale (47) sur la première pièce, une pièce intermédiaire logée (51) dans ladite rainure et des moyens de fixation de la seconde pièce (7) sur la pièce intermédiaire (51).

15. Section de voie basse avant selon l'une des revendications précédentes, **caractérisée en ce qu'**elle est reliée par une traverse (45) à une section de voie basse avant homologue.

16. Section de voie basse avant selon la revendication 15, **caractérisée en ce que** l'organe d'arrêt est du type goupille (55) logée dans la première pièce (5) et la traverse (45).

17. Section de voie basse avant selon la revendication 16, **caractérisée** ladite goupille (55) est sensiblement calibrée en résistance au cisaillement.

18. Kit de voie basse avant pour véhicule automobile, **caractérisé en ce qu'**il comprend deux sections de voie basse selon l'une des revendications précédentes.

## Claims

1. Low front section for a motor vehicle, comprising a first elongated part (5), of the extension type, the rear end of which faces a structural element (3) of the vehicle of the cradle type, whereas its front end is connected to a structural element (1) of the vehicle of the side rail type by a first connecting device (19), **characterised in that,** with the rear end of the first elongated part (5) being movably mounted facing the structural element of the vehicle of the cradle type, said first connecting device (19) comprises a slide-type connection (31) which allows movement in a substantially longitudinal direction, and a tear-off stopping member (35, 55), designed to prevent said movement under normal circumstances, until it is torn off.

2. Low front section according to claim 1, **characterised in that** said first connecting device (19) comprises a second elongated part (7), of the hanging type, of substantially vertical orientation, and **in that** the slide-type connection (31) is provided between the first part (5) and the second part (7).

3. Low front section according to claim 1, **characterised in that** it further comprises a second connecting device (21) between the rear of the first part (5) and the cradle-type structural element (3) of the vehicle, this second connecting device (21) comprising guide means for the first part.

4. Low front section according to claim 3, **characterised in that** the guide means comprise a connection of the linear-annular type (41, 43).

5. Low front section according to claim 4, **characterised in that** the connection of the linear-annular type comprises a longitudinal elongated cell (43) adapted to accommodate a stud (41).

6. Low front section according to one of the preceding claims, **characterised in that** the first part (5) supports a shock-absorbing member (11).

7. Low front section according to one of the preceding claims, **characterised in that** the first part (5) at least partly supports a transverse beam (15).

8. Low front section according to claims 5 and 6, taken in combination, **characterised in that** the shock-absorbing means (11) are disposed between the beam (15) and the first part (5).

9. Low front section according to one of the preceding claims, **characterised in that** the first part (5) has a section adapted to deform longitudinally in a predictable manner.

10. Low front section according to claim 9, **characterised in that** said section is adapted to crumple.

11. Low front section according to one of the preceding claims, **characterised in that** the slide-type connection (31) comprises a longitudinal groove (25) which is fixedly connected to the first part (5) and a pin (27) which is fixedly connected to the second part.

12. Low front section according to claim 11, **characterised in that** the stop member comprises a stud (35) accommodated in the first part (5) and fixedly connected to the second part (7).

13. Low front section according to claim 11, **characterised in that** the stud (35) is substantially calibrated in shearing strength.

14. Low front section according to one of the preceding claims, **characterised in that** the slide-type connection (31) comprises a longitudinal groove (47) on the first part (5), an intermediate part (51) accommodated in said groove and means for attaching the second part (7) to the intermediate part (51).

15. Low front section according to one of the preceding claims, **characterised in that** it is connected by a cross-member (45) to a similar low front section.

16. Low front section according to claim 15, **characterised in that** the stop member is of the pin type (55) accommodated in the first part (5) and the cross-member (45).

17. Low front section according to claim 16, **characterised in that** said pin (55) is substantially calibrated in shearing strength.

18. Low front section kit for a motor vehicle, **characterised in that** it comprises two low front sections according to one of the preceding claims.

## Patentansprüche

1. Vorderer Unterbauabschnitt für ein Kraftfahrzeug, der ein erstes längliches Bauteil (5) vom Typ Verlängerung aufweist, dessen hinteres Ende einem Strukturelement (3) des Fahrzeugs vom Typ Halterung gegenüberliegt, während sein vorderes Ende über eine erste Verbindungsvorrichtung (19) mit einem Strukturelement (1) des Fahrzeugs vom Typ Längsträger verbunden ist, **dadurch gekennzeichnet, dass** die erste Verbindungsvorrichtung (19) eine Verbindung vom Typ Gleitschiene (31), die eine Verschiebung im Wesentlichen in einer Längsrichtung erlaubt, und ein abreißbares Halteelement (35, 55) aufweist, das eingerichtet ist, um normalerweise die Verschiebung bis zum Abreißen zu verhindern, wobei das hintere Ende des ersten länglichen Bauteils (5) gegenüber dem Strukturelement (3) des Fahrzeugs vom Typ Halterung beweglich montiert ist.

2. Vorderer Unterbauabschnitt nach Anspruch 1, **dadurch gekennzeichnet, dass** die erste Verbindungsvorrichtung (19) ein zweites längliches Bauteil (7) von der Art Hänger mit im Wesentlichen senkrechter Ausrichtung aufweist, und dass die Verbindung vom Typ Gleitschiene (31) zwischen dem ersten Bauteil (5) und dem zweiten Bauteil (7) vorgesehen ist.

3. Vorderer Unterbauabschnitt nach Anspruch 1, **dadurch gekennzeichnet, dass** er außerdem eine zweite Verbindungsvorrichtung (21) zwischen der Rückseite des ersten Bauteils (5) und dem Strukturelement des Fahrzeugs vom Typ Halterung (3) aufweist, wobei diese zweite Verbindungsvorrichtung (21) Führungsmittel für das erste Bauteil aufweist.

4. Vorderer Unterbauabschnitt nach Anspruch 3, **dadurch gekennzeichnet, dass** die Führungsmittel eine Verbindung vom linear-ringförmigen Typ (41, 43) aufweisen.

5. Vorderer Unterbauabschnitt nach Anspruch 4, **dadurch gekennzeichnet, dass** die Verbindung vom linear-ringförmigen Typ eine längliche, in Längsrichtung verlaufende Aushöhlung (43) aufweist, die geeignet ist, um einen Zapfen (41) aufzunehmen.

6. Vorderer Unterbauabschnitt nach einem der vorhergehenden Ansprüche, **dadurch gekennzeichnet, dass** das erste Bauteil (5) ein Stoßabsorptionselement (11) trägt.

7. Vorderer Unterbauabschnitt nach einem der vorhergehenden Ansprüche, **dadurch gekennzeichnet, dass** das erste Bauteil (5) zumindest zum Teil einen Querbalken (15) trägt.

8. Vorderer Unterbauabschnitt nach den Ansprüchen 5 und 6 in Kombination gesehen, **dadurch gekennzeichnet, dass** die Stoßabsorptionsvorrichtungen (11) zwischen dem Balken (15) und dem ersten Bauteil (5) angeordnet sind.

9. Vorderer Unterbauabschnitt nach einem der vorhergehenden Ansprüche, **dadurch gekennzeichnet, dass** das erste Bauteil (5) einen Abschnitt aufweist, der sich vorhersehbar in Längsrichtung verformen kann.

10. Vorderer Unterbauabschnitt nach Anspruch 9, **dadurch gekennzeichnet, dass** der Abschnitt sich in Längsrichtung zusammenquetschen kann.

11. Vorderer Unterbauabschnitt nach einem der vorhergehenden Ansprüche, **dadurch gekennzeichnet, dass** die Verbindung vom Typ Gleitschiene (31) eine Längsnut (25), die fest mit dem ersten Bauteil (5) verbunden ist, und einen Drehzapfen (27) aufweist, der fest mit dem zweiten Bauteil verbunden ist.

12. Vorderer Unterbauabschnitt nach Anspruch 11, **dadurch gekennzeichnet, dass** das Halteelement einen Zapfen (35) aufweist, der im ersten Bauteil (5) angeordnet und fest mit dem zweiten Bauteil (7) verbunden ist.

13. Vorderer Unterbauabschnitt nach Anspruch 11, **dadurch gekennzeichnet, dass** der Zapfen (35) im Wesentlichen in Scherfestigkeit kalibriert ist.

14. Vorderer Unterbauabschnitt nach einem der vorhergehenden Ansprüche, **dadurch gekennzeichnet, dass** die Verbindung vom Typ Gleitschiene (31) eine Längsnut (47) auf dem ersten Bauteil, ein Zwischenbauteil (51), das in der Nut (51) angeordnet ist, und Mittel zur Befestigung des zweiten Bauteils (7) am Zwischenbauteil (51) aufweist.

15. Vorderer Unterbauabschnitt nach einem der vorhergehenden Ansprüche, **dadurch gekennzeichnet, dass** er über einen Querträger (45) mit einem entsprechenden vorderen Unterbauabschnitt verbunden ist.

16. Vorderer Unterbauabschnitt nach Anspruch 15, **dadurch gekennzeichnet, dass** das Halteelement vom Typ Stift (55) ist, der im ersten Bauteil (5) und im Querträger (45) angeordnet ist.

17. Vorderer Unterbauabschnitt nach Anspruch 16, **dadurch gekennzeichnet, dass** der Stift (55) im Wesentlichen in Scherfestigkeit kalibriert ist.

18. Vorderer Unterbau-Bausatz für ein Kraftfahrzeug, **dadurch gekennzeichnet, dass** er zwei Unterbauabschnitte nach einem der vorhergehenden Ansprüche aufweist.
